# EUROPÄISCHE PATENTSCHRIFT

(11) **EP 3 428 097 B1**
(45) Veröffentlichungstag und Bekanntmachung des Hinweises auf die Patenterteilung: **17.07.2024**
(21) Anmeldenummer: 17209031.8
(22) Anmeldetag: 20.12.2017
(51) Int. Cl.: B65H 75/14, B65H 75/50, B23K 33/00, B29C 65/00, B29C 65/08, B29C 65/10, B29C 65/14, B29C 65/20, B29C 65/48

(54) **SPULE AUS THERMOPLASTISCHEM MATERIAL UND VERFAHREN ZU IHRER HERSTELLUNG**
COIL MADE OF THERMOPLASTIC MATERIAL AND A METHOD FOR ITS PREPARATION
BOBINE DE MATÉRIAU THERMOPLASTIQUE ET SON PROCÉDÉ DE FABRICATION

(30) Priorität: 14.07.2017 DE 202017104227 U
(43) Veröffentlichungstag der Anmeldung: 16.01.2019
(73) Patentinhaber: PURUS PLASTICS GmbH, 95659 Arzberg (DE)
(72) Erfinder: Manzei, Thomas, 95615 Marktredwitz (DE); Wlasak, Martin, 95100 Selb (DE)
(74) Vertreter: Sperschneider, Alexandra

(56) Entgegenhaltungen:
- WO-A1-92/20603
- DE-U1- 20 021 819
- GB-A- 2 020 629
- JP-A- 2004 202 828
- JP-A- H1 125 643
- US-A- 3 501 110
- US-A- 6 036 138
- US-A1- 2005 284 559

## Beschreibung

Die Erfindung betrifft eine Spule aus thermoplastischem Material zum Aufwickeln von Wickelgut sowie Verfahren zu ihrer Herstellung.

Aus mehreren Ausgangsteilen hergestellte Spulen mit hohlem Kern sind in vielen Ausführungsformen bekannt. Sie werden zum Aufwickeln und zum Transport von Wickelgut, z. B. Kabeln, Drähten, Fäden, Seilen oder Kunststoffbändern, verwendet. Derartige Spulen bestehen meist aus einem ein- oder mehrteiligen zylindrischen oder konischem Spulenkern und zwei Flanschscheiben an dessen beiden Enden. Die Spulen können auf verschiedene Art und Weise zusammengebaut sein.

Zum Stand der Technik wird auf die DE 197 00 185 A1 und die DE 40 01 250 A1 bezug genommen.

Die DE 197 00 185 A1 beschreibt eine Spule, deren Spulenkern von den beiden endseitigen Flanschscheiben beiderseits zur Mitte konisch zusammenläuft und in der Mitte geteilt ist, so dass die beiden Spulenteile im Falle des Leertransports platzsparend gestapelt werden können. Die Verbindung der beiden Spulenteile erfolgt mit Hilfe einer Art von Bajonettverschluss, der eine Verbindung der beiden Teile mit einer gewissen Vorspannung ermöglicht. Die Vorspannung verhindert, dass die beiden Spulenteile sich ohne weiteres zurückdrehen und trennen können, jedoch ist dieses Zurückdrehen nicht zwingend ausgeschlossen, wenn die Spule einer rauhen Behandlung ausgesetzt ist oder, etwa beim Transport, für längere Zeit Schwingungen unterworfen wird.

Aus dem DE 20 2013 101 355 U ist eine teilbare Spule zum Aufwickeln von strangförmigem Wickelgut bekannt geworden, bei der die Einzelbestandteile durch ein Stecksystem miteinander verbunden werden.

Aus der US 6036138 A ist eine gelötete Metallspule für optische Fasern bzw. Lichtwellenleiter bekannt geworden, welche einen Spulenkern mittels Lot in einer Vertiefung eines Flansches befestigt. Dazu wird Löten eingesetzt. Löten ist ein thermisches Verfahren zum Fügen von Werkstoffen, wobei eine flüssige Phase durch Schmelzen eines Lotes (Schmelzlöten) oder durch Diffusion an den Grenzflächen (Diffusionslöten) entsteht. Dabei wird eine Legierung erzeugt, das Werkstück in der Tiefe aber nicht aufgeschmolzen: Die Liquidustemperatur der Grundwerkstoffe wird nicht erreicht. Nach dem Erstarren des Lotes ist eine stoffschlüssige Verbindung aus mindestens zwei Materialien - dem Lot und dem Werkstück - hergestellt. Es wird dort vorgeschlagen, dass die Lötstelle sich in einer ringförmigen Vertiefung des Flansches nahe der Durchgangs-Zentralbohrung bildet, so daß das Lot darin verläuft, während der Spulenkern gerichtet auf einer Stufe in der Vertiefung ruht. Dadurch wird eine stoffschlüssige Verbindung, bei welcher verflüssigtes Material in einem Ringkanal aufgenommen wird gebildet. Verlöten ist aber insofern ungünstig, als es störanfällig ist, so dass keine sichere stoffschlüssige Verbindung zwischen Spulenkern und Spulenflansch erfolgt. Die stoffschlüssige Verbindung erfolgt über das Lotmaterial. Löten hat stets das Problem, dass möglicherweise im Lot Fehlstellen auftreten oder das Lot mit den zu verbindenden Materialien nur unzureichend bindet oder in diese eindiffundiert. Schließlich muss es zusätzlich zu den Materialien der Spulenbestandteile vorgehalten und lokal appliziert werden, was zusätzlichen Aufwand erfordert.

Die Druckschrift GB 2 020 629 A offenbart eine magnetische Aufzeichnungsbandspule mit einer Nabe und zwei Seitenflanschen für Computerbänder.

Die Druckschrift WO 92/ 20603 A1 offenbart eine Spule gemäß dem Oberbegriff des Anspruchs 1 und beschreibt einen Spulenkörper für fadenförmiges Wickelgut, welcher durch spanende Bearbeitung hergestellt wird.

In der Druckschrift DE 200 21 819 U ist eine Spule zum Aufwickeln von Kabeln mit einem Wickelkern aus Pappe und endseitig angeordneten Flaschen aus Sperrholz daran offenbart.

Die bekannten Spulen mit hohlem Kern sind somit verbesserungsfähig, da die Verbindungen zwischen den Ringflanschen und dem Kern erhöhten Beanspruchungen häufig nicht widerstehen konnten und aufwändige Verfahren zu ihrer Herstellung benötigt wurden.

Der Erfindung liegt daher die Aufgabe zugrunde, eine Spule der eingangs genannten Art zu schaffen, die einfacher, bevorzugt auch automatisch - herstellbar ist und eine hohe Sicherheit gegen unbeabsichtigte Auflösung der Spule in ihre Einzelkomponenten bietet.

Die Aufgabe wird durch eine Spule nach Anspruch 1 sowie ein Verfahren nach Anspruch 6 gelöst. Vorteilhafte Weiterbildungen ergeben sich aus den abhängigen Ansprüchen.

Erfindungsgemäß wird eine Spule aus thermoplastischem Material zum Aufwickeln von strangförmigem Gut (Wickelgut), mit Flanschscheiben mit einer Flanschaußenfläche und einer Flanschinnenfläche mit einer zentralen Durchgangs-Zentralbohrung, die von einer ringförmigen Vertiefung mit einer darin verlaufenden Ringwand in der Flanschinnenfläche umgeben ist, und einem rohrförmigen Spulenkern, geschaffen, wobei der Spulenkern aus einem Rohr besteht, dessen Stirnflächen in den ringförmigen Vertiefungen der Flanschscheiben stoffschlüssig verbunden sind.

Dadurch, dass die Spule aus nur drei Einzelteilen, von denen zwei identisch sind, aufgebaut wird, ist es möglich, verschiedenste Abmessungen - d.h. unterschiedliche Spulenkerndurchmesser und verschiedene Wickelbreiten mit nur zwei Grundteilen - verschiedenen Ringflanschen sowie Spulenkernrohren - zu verwirklichen.

Durch Auswahl von Spulenkernrohren - bspw. Kunststoffrohren - unterschiedlicher Längen und Weiten können verschiedenste Wickelbreiten realisiert werden. Falls eine erhöhte Biegefestigkeit der Spulenkerne erwünscht ist, können Rohre mit Verstärkungsrippen eingesetzt werden. Genauso können Rohre mit eingeformten Stäben oder Filamenten verwendet werden.

Die Anschlüsse für die Kunststoffrohre, hier eine umlaufende Ringwand/ringförmige Erhebung in einer ringförmigen Vertiefung der Flanschscheiben können - je nach Anforderung - mit unterschiedlichen Flanschdimensionen und Rohrflanschdurchmessern realisiert werden. Es ist dabei unwesentlich, ob der Flansch eine durchgehend konstante Stärke aufweist oder aus Gründen der Handhabung in Wickelautomaten und beim Transport im Bereich der Durchgangs-Zentralbohrung eine andere Stärke als in anderen Bereichen des Flansches aufweist.

Erfindungsgemäß erfolgt die Anbindung der Stirnflächen des Spulenkern-Rohrs an die Ringwand der Flanschinnenflächen durch Fügeverfahren, bei denen die Liquidustemperatur des Spulenmaterials überschritten wird - nämlich Schweißen, insbesondere Laserstrahlschweißen und konventionellen Fügeverfahren, wie Ultraschall-, Vibrations- oder Heißspiegelschweißen, Reibschweißen, Heizelementschweißen, Heißluftschweißen, Kontakt-Kunststoff schweißen, Infrarotschweißen. Dadurch wird kein zusätzliches Verbindungsmaterial für die stoffschlüssige Anbindung benötigt, es entsteht kein Abfall und die fertigen Spulen lassen sich leicht recyceln, da sie nur aus einem Material aufgebaut sind.

Bspw. kann die ringförmige Vertiefung einen darin ausgebildeten Innen - und einen Außenkanal sowie eine die Kanäle für geschmolzenes Material trennende Ringwand aufweisen, die darin mit einer Spulenkernstirnfläche verbunden ist. In der ringförmigen Vertiefung im Flansch verläuft bei einer Ausführungsform in etwa mittig eine Ringwand, wobei beidseitig von dieser ein Innen- und Außenkanal für den beim Verbinden anfallende Materialüberschuß (Schmelzfluß, wie Schweißraupen) ausgebildet ist.

Bei einer typischen Ausführungsform der Erfindung als Kunststoffspule ist der Spulenkern ein extrudiertes Kunststoffrohr. Dies ist günstig, denn derartige Rohre sind leicht zu beschaffen und auf die gewünschte Wickelbreite mit einfachen Mitteln zu trennen, so dass sie ggf. auch an verschiedenen Montageorten beschaffbar sind und dort an geeignete Flanschscheiben angebracht werden können. So können Transportkosten für die Rohre eingespart werden

Die Außenflächen der Flanschscheiben können im Bereich der Zentralbohrung Mitnehmer-Rastausnehmungen aufweisen, in die Mitnehmer einer Spulenantriebs- oder Spulenbremseinrichtung eingreifen können.

Bevorzugt hat das Kunststoffrohr in etwa gleichen Durchmesser wie die Ringwand in der Flanschinnenfläche.

Typische Spulen haben ein Kernrohr, das 150 - 700 mm lang ist Die Kerndurchmesser betragen dann 110 bis 500 mm.

Die Zentralöffnung, in die Wickelwerkzeuge eingreifen können, kann bei diesen Ausführungsformen dann einen Durchmesser zwischen 55 und 130 mm haben

Bevorzugt weist das Kunststoffrohr des Spulenkerns in etwa gleichen Durchmesser und Wanddicke wie die Ringwand in der Flanschvertiefung auf und ist an diese Erhebung stoffschlüssig angebunden. Ggf. anfallende Schweißraupen oder verflüssigtes Material läuft in den Außen- und Innenkanal der ringförmigen Vertiefung und unterstützt dort die Anbindung des Kunststoffrohrs des Spulenkerns. Die Spulen können Kerne haben, die 150 - 700 mm lang sind. Häufig ist der Kerndurchmesser in diesen Fällen zwischen 110 bis 500 mm. Die Zentralbohrung hat dann häufig einen Durchmesser zwischen 55 und 130 mm.

Ein Verfahren zur Herstellung einer erfindungsgemäßen Spule aus thermoplastischem Material zum Aufwickeln von strangförmigem Gut weist die Schritte auf:
a)Vorlegen von:
   zwei Flanschscheiben mit einer Flanschaußenfläche und einer Flanschinnenfläche und einer zentralen Durchgangs-Zentralbohrung, die von einer ringförmigen Vertiefung in der Flanschinnenfläche umgeben ist, und einer Ringwand in der ringförmigen Vertiefung, wobei mindestens ein Kanal in der ringförmigen Vertiefung neben der Ringwand zur Aufnahme von verflüssigtem Verbindungsmaterial verläuft; und
   einem Spulenkern etwa gleichen Durchmessers und Wanddicke wie die Ringwand;
b)Aufeinanderdrücken von Spulenkernrohr und Ringwand; und
c) Verflüssigen des Materials im Kontaktbereich zwischen Spulenkernrohr und

Ringwand unter Fließen von verflüssigtem Material in den mindestens einen Kanal unter stoffschlüssigem Verbinden von Ringwand und Spulenkernrohrstirnfläche.

Das Verflüssigen des Spulenmaterials erfolgt durch Schweißverfahren.

Das Verfahren kann mit Metall oder Kunststoffen durchgeführt werden.

Dadurch, dass ein Modulsystem für den Spulenaufbau entwickelt wurde, können mit wenigen Flanschscheiben und üblichen Rohrabschnitten die unterschiedlichsten Spulen materialsparend zur Verfügung gestellt werden.

Somit erzielt die Erfindung unter anderem die Vorteile:
- Aufbau mit einfach verfügbaren Mitteln
- Ausgereifte Verbindungsverfahren
- die Verbindungsverfahren sind seit mehr als zehn Jahren zuverlässig im Einsatz.
- Es kann Recycling-Kunststoff oder Metall eingesetzt werden
- durch den vollständigen Stoffschluß zwischen den Flansch- und Kernmaterialien ohne Lot/Kleber wird geringes Gewicht bei hoher Stabilität erzielt und die Spule lässt sich leicht recyclen, da sie nur aus wenigen, bevorzugt einem Material, besteht.
- Modulsystem, mit dem verschiedene Spulengeometrien (Wickelbreite, Flanschdurchmesser) realisiert werden können

Im folgendem werden bevorzugte Ausführungsbeispiele der Erfindung, auf die sie keinesfalls eingeschränkt ist, anhand der beigefügten Zeichnung näher erläutert. Darin zeigen:
Fig. 1 eine perspektivische Explosionsansicht von Einzelkomponenten einer Spule;
Fig. 2 eine perspektivische Ansicht einer fertig zusammengebauten Spule
Fig. 2A ein Detail der Figur 2 mit einer Zentrierkerbe und Wickelgut-Durchführungsöffnungen
Fig. 3 ein Detail der Flanschinnenfläche mit Spulenkernrohr vor dem Verbinden mit einer Ringwand auf der ringförmigen Vertiefung und einem Außenkanal
Fig. 3 A ein Detail einer weiteren Ausführungsform der Flanschinnenfläche mit Spulenkernrohr vor dem Verbinden mit einer Ringwand auf der ringförmigen Vertiefung und einem Außen- und einem Innenkanal.
Fig. 4 das Detail der Fig. 3 und 3A nach Verschweißen von Flansch und Kern
Fig.5 eine Eingangsöffnung für Wickelgut im Spulenkernrohr für vollautomatische Wickelanlagen
Fig. 6 schematisch die Ausgangsprodukte einer Spule im Längsschnitt;
Fig. 7 schematisch die fertige Spule im Längsschnitt; und
Fig. 8a - 8e ein Verfahren zur Herstellung einer erfindungsgemäßen Kunststoffspule Nachfolgend werden Ausführungsbeispiele der Erfindung anhand einer Kunststoffspule beschrieben. Selbstverständlich sind die offenbarten Ausführungsformen nur beispielhaft und können alternative Formen annehmen. Die Figuren sind nicht notwendigerweise maßstäblich; so können einige Merkmale übertrieben oder minimiert sein, um Details einzelner Komponenten zu verdeutlichen.

Die Erfindung wird nachfolgend am Beispiel einer Kunststoffspule näher erläutert - sie kann aber mit jeglichem thermoplastischen Material verwirklicht werden.

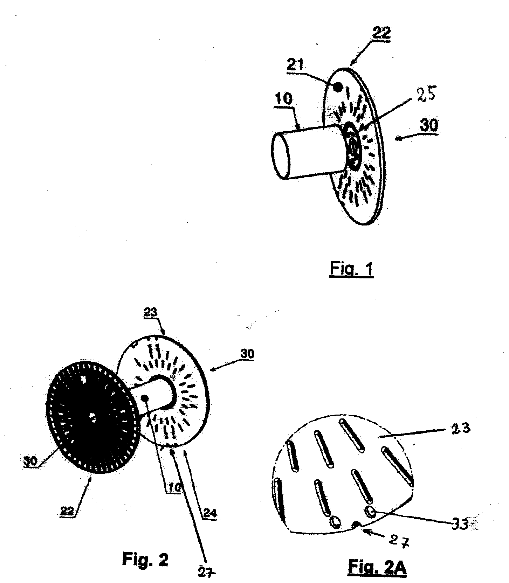

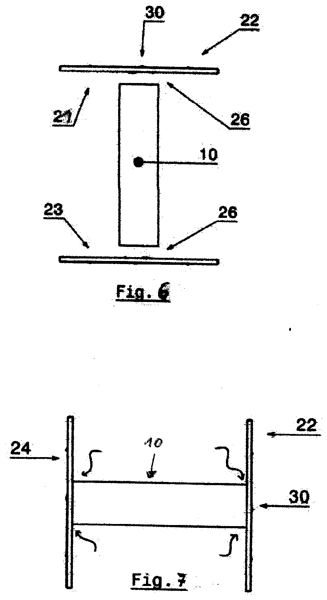

In Fig. 1 sind Einzelteile einer erfindungsgemäßen Kunststoffspule mit einem zylindrischen Spulenkern 10, an dessen Ende eine Flanschscheibe 22 angeordnet ist, perspektivisch gezeigt. Es ist erkennbar, dass der Spulenkern 10 ein Rohr ist. Schematisch ist dies in Fig. 6 dargestellt. Die Flanschscheibe 22 weist eine Zentralbohrung 30 und eine ringförmige Vertiefung 25 auf der Flanschinnenseite auf, welche einen im wesentlichen dem Spulenkern-Rohr entsprechenden Durchmesser hat

In Fig. 2 ist eine Ausführungsform einer vollständig aufgebauten erfindungsgemäßen Spule gezeigt. In den Flanschscheiben 22, 23 können Wickelgutdurchführungsöffnungen 33 - wie im Detail der Fig. 2A gezeigt - ausgebildet sein, sowie ggf. eine Zentrierkerbe 27.

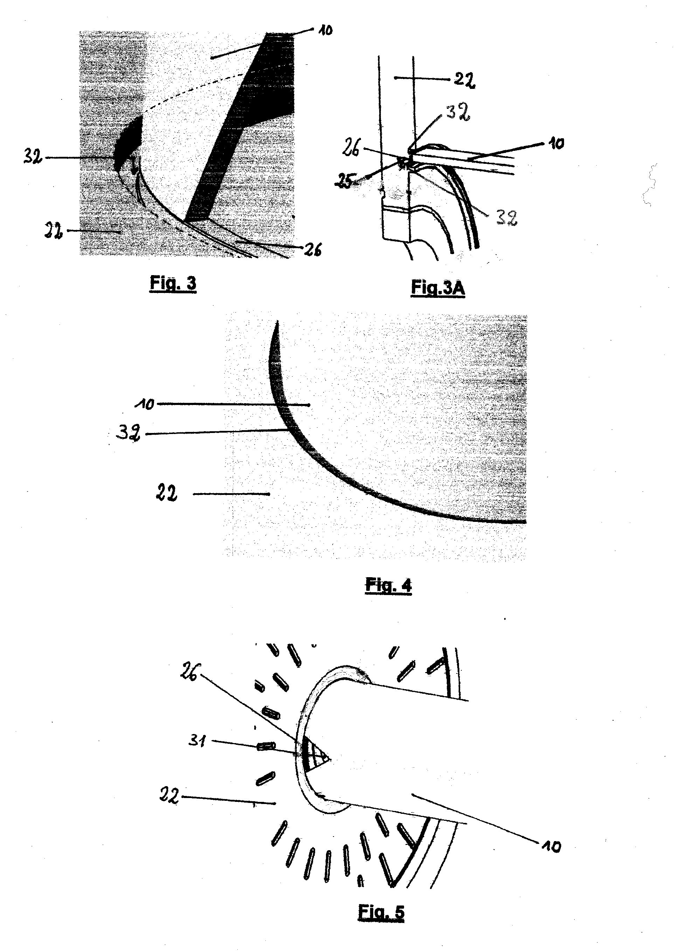

Wie in Fig. 3 schematisch im Detail dargestellt, ist die Flanschscheibe 22 mit einer Ringwand 26 in der ringförmigen Vertiefung 25 so zum Spulenkern 10 angeordnet, dass die Spulenkernstirnfläche auf der Ringwand 26 in der ringförmigen Vertiefung 25 aufliegt. Außen neben der Ringwand 26 ist bei dieser Ausführungsform ein Kanal 32 ausgebildet, in den beim Schweißen anfallendes überschüssiges Material, wie Schweißraupen, hineinläuft. Bei der Ausführungsform der Fig. 3A sind neben der Ringwand 26 innen und außen Kanäle 32 für den gleichen Zweck ausgebildet. Die Ringwand 26 wird, wie in Fig.4 im Detail gezeigt, bei dieser Ausführungsform mit den Spulenkernstirnflächen verschweißt, wie es auch durch die gewellten Linien in Fig.7 angedeutet ist. Hier erfolgte das Verschweißen durch Heizelementschweißung - ein sehr zuverlässiges und übliches Verfahren. Das dabei als Schweißraupe austretende Kunststoffmaterial wird in dem mindestens einen Kanal 32 in der ringförmigen Vertiefung 25 im Flansch 22 neben der Ringwand 26 aufgenommen. Dadurch werden die Spulen-Funktion beeinträchtigende Schweißraupen auf dem Spulenkern 10 vermieden. Eine Eingangsöffnung 31 für Wickelgut (s. Fig. 5), bspw. für Kabel, in welcher der Anfang des Stranges festgelegt wird, wird so nicht zugesetzt oder unkontrolliert verengt, sondern bleibt auch nach dem Verschweißen barrierefrei durchgängig.

Die Spulenbestandteile 22, 24, 10 können insgesamt aus Kunststoff hergestellt werden. In diesem Fall kann beispielsweise die Ringwand 26 für den Spulenkern 10 unmittelbar an die Flanschscheiben 22, 24 angeformt sein, bspw. durch Spritzguss.

Die rohrförmigen Spulenkerne 10 können durch Abtrennen von Abschnitten herkömmlicher Kunststoffrohre in der gewünschten Länge hergestellt werden und dann an ihren Stirnflächen mit den Ringwänden 26 verbunden - verschweißt -werden.

Der Spulenkern 10, der den Wickelkern für das Wickelgut bildet, kann Durchbrechungen aufweisen, durch die das Wickelgut von der Innenseite des Spulenkerns behandelt werden kann. So kann beispielsweise über Durchbrechungen erwärmte Luft zur Trocknung des Wickelgutes hindurchgeführt werden. In Betracht kommt auch eine Behandlung mithilfe von Gasen oder Flüssigkeiten.

Ebenso können die Flansche 22, 24 zur Gewichtsreduktion und Materialersparnis mit Durchbrüchen und dünneren Abschnitten ausgebildet werden, wie aus Fig. 2 ersichtlich. Dort ist perspektivisch eine fertige Kunststoffspule gezeigt, wobei man deutlich Verstärkungsrippen und -Schlitze in den Flanschen zwecks Gewichts- und Materialersparnis erkennt.

Derartige Spulen können auch aus Metall aufgebaut werden, falls die Einsatzbedingungen dies erfordern. Die Verfahrensschritte sind dann, wie dem Fachmann geläufig, entsprechend auszuwählen und anzupassen.

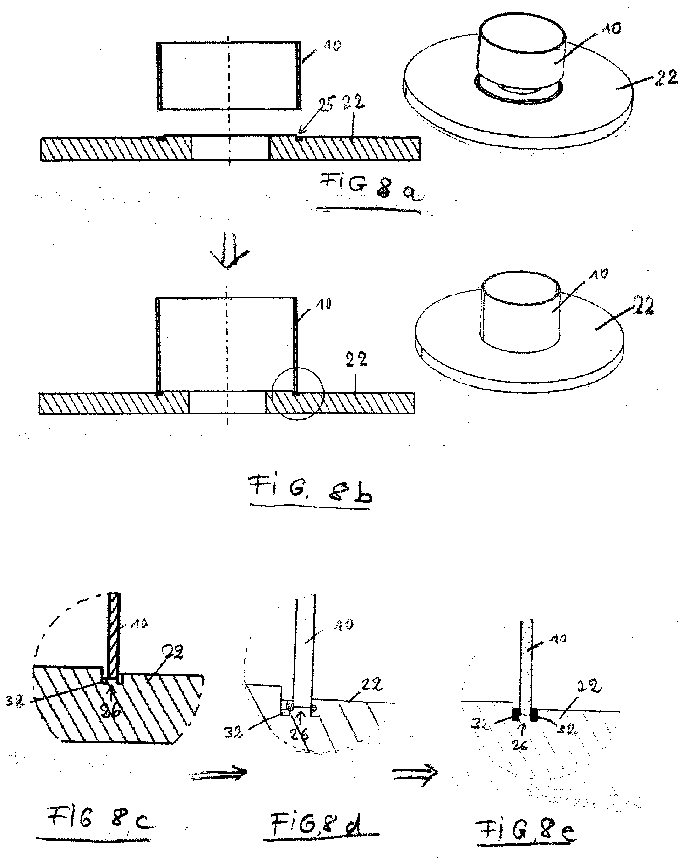

Ein Verfahren zur Herstellung einer verschweißten Kunststoffspule ist in Fig. 8a bis 8e schematisch gezeigt. In Fig. 8a ist perspektivisch und im Längsschnitt schematisch das Kunststoffrohr für den Spulenkern 10 und ein Flansch 22 mit ringförmiger Vertiefung 25 und einer darin verlaufenden Ringwand 26 gezeigt. In Fig. 8b werden die beiden Bauteile gerichtet so aufeinandergedrückt, dass die Ringwand 26 und die Spulenkernrohrstirnfläche aufeinanderliegen und anschließend erwärmt, bis das Kunststoffmaterial zu fließen beginnt (Fig. 8d) und sich schließlich verflüssigt (Fig. 8e) und Flanschwand 26 und Kunststoffrohr 10 sich stoffschlüssig unter Ausbildung von erstarrtem Materialfluß/ Schweißraupe in den Kanälen 32 der ringförmigen Vertiefung 25 verschweißen. Durch die ringförmige Vertiefung 25 ist die Schweißraupe im wesentlichen bündig mit der Flanschoberfläche und stört im Wickelraum nicht. Dadurch ist es möglich, glatte und störungsfreie Wicklungen bis an die Flanschoberfläche herzustellen. Durch die stoffschlüssige Verbindung entsteht ein hoch-zugfester und belastbarer Anschluß der Flansche am Spulenkern.

Obwohl die Erfindung anhand von Ausführungsbeispielen mit Kunststoffteilen näher erläutert wurde, sind dem Fachmann viele Abwandlungen derselben aufgrund seines Fachwissens geläufig. Die Beschreibung der Erfindung ist daher lediglich exemplarisch und dem Fachmann geläufige Variationen fallen ebenfalls unter den Schutzumfang der Erfindung, wie er durch die Ansprüche definiert ist.

### Bezugszeichenliste

10 Spulenkern
22 Flanschscheibe
24 Flanschscheibe
21 Flanschinnenfläche
23 Flanschinnenfläche
25 ringförmige Vertiefung im Flansch um 30
26 umlaufende Ringwand in 25
27 Zentrierkerbe
30 Durchgangs-Zentralbohrung
31 Eingangsöffnung für Wickelgut
32 Kanal
33 Wickelgutdurchführungsöffnung

## Patentansprüche

1. Spule aus thermoplastischem Material zum Aufwickeln von strangförmigem Gut, mit Flanschscheiben (22, 24) mit einer Flanschaußenfläche und einer Flanschinnenfläche (21, 23) mit jeweils einer zentralen Durchgangs-Zentralbohrung (30), die von einer ringförmigen Vertiefung (25) mit einer darin befindlichen Ringwand (26) in der Flanschinnenfläche umgeben ist, und
einem rohrförmigen Spulenkern (10),
wobei der Spulenkern (10) aus einem Rohr besteht, dessen Stirnflächen mit einer Ringwand (26) in den ringförmigen Vertiefungen (25) der Flanschscheiben (22, 24) stoffschlüssig verbunden sind,
wobei der Spulenkern (10) in etwa gleichen Durchmesser wie die Ringwand (26) in der ringförmigen Vertiefung (25) hat
und die stoffschlüssige Anbindung des Spulenkerns (10) an der Ringwand (26) der Flanschinnenflächen (21, 23) durch Schweißen, insbesondere Heissluftschweißen, Kontaktschweißen, Ultraschallschweißen, Infrarotschweissen, Rohrspiegelschweißen, Heizelementschweißen erfolgt ist, **dadurch gekennzeichnet, dass** neben der Ringwand (26) mindestens ein Kanal in der ringförmigen Vertiefung (25) zur Aufnahme von verflüssigtem Verbindungsmaterial vorgesehen ist.

2. Spule nach Anspruch 1, **dadurch gekennzeichnet, dass** der Spulenkern (10) ein extrudiertes Kunststoffrohr ist.

3. Spule nach einem der vorangehenden Ansprüche **dadurch gekennzeichnet, dass** der Spulenkern (10) 150 - 700 mm lang ist.

4. Spule nach einem der vorangehenden Ansprüche, **dadurch gekennzeichnet, dass** der Durchmesser des Spulenkerns (10) 110 bis 500 mm beträgt.

5. Spule nach einem der vorangehenden Ansprüche, **dadurch gekennzeichnet, dass** die Zentralöffnung (30) der Flanschscheiben (22, 24) einen Durchmesser zwischen 55 und 130 mm hat.

6. Verfahren zur Herstellung einer gebauten Spule aus thermoplastischem Material zum Aufwickeln von strangförmigem Gut nach einem der vorangehenden Ansprüche, **gekennzeichnet durch**:
a. Vorlegen von zwei Flanschscheiben mit einer Flanschaußenfläche und einer Flanschinnenfläche mit jeweils einer zentralen Durchgangs-Zentralbohrung, die von einer ringförmigen Vertiefung in der Flanschinnenfläche umgeben ist, wobei in der ringförmigen Vertiefung eine Ringwand unter Ausbildung mindestens eines Kanals in der ringförmigen Vertiefung neben der Ringwand verläuft, und
einem Spulenkern etwa gleichen Durchmessers wie die Ringwand;
b. Drücken des Spulenkerns auf die Ringwand in der ringförmigen Vertiefung der Flanschinnenfläche; und
c. Verflüssigen des Materials im Kontaktbereich zwischen Spulenkernrohr und ringförmiger Erhebung unter Fließen von verflüssigtem Material in den mindestens einen Kanal und Ausbildung einer stoffschlüssigen Verbindung zwischen der Ringwand und dem Spulenkern, wobei das temporäre Verflüssigen des Materials im Kontaktbereich durch Schweißen durchgeführt wird.

7. Verfahren nach Anspruch 6 ,
**dadurch gekennzeichnet, dass**
die Spule aus Metall oder Kunststoff hergestellt wird.

## Claims

1. A spool made of thermoplastic material for winding strand-shaped material, comprising flange discs (22;24) having an outer flange surface and an inner flange surface (21;23), each of which has a central through central bore (25) that is surrounded by an annular recess with an annular wall (26) located therein within the inner flange surface, and
a one-piece tubular spool core (10),
wherein the spool core (10) comprises a tube, end surfaces of which are connected in a materially bonded manner on an annular wall (26) located within the annular recess (25) of the flange discs (22;24),
wherein spool core (10) has approximately the same diameter as the annular wall (26) in the annular recess (25) by said connection material
and the materially bonded connection of the spool core (10) to the annular wall (26) of the inner flange surface (21;23) has been formed by means of welding, in particular hot air welding, contact welding, ultrasonic welding, infrared welding, pipe mirror welding, hot plate welding,
**characterized in that** at least one channel is provided adjacent to the annular wall (26) in the annular recess (25) for receiving liquefied connection material.

2. Spool according to claim 1, **characterized in that** the spool core (10) is an extruded plastic tube.

3. Spool according to one of the preceding claims, **characterized in that** the spool core (10) is 150-700 mm long.

4. Spool according to one of the preceding claims, **characterized in that** the diameter of the spool core (10) is 110 to 500 mm

5. Spool according to one of the preceding claims, **characterized in that** the central through central bore (30) of the flange discs (22;24) has a diameter of between 55 and 130 mm.

6. A method for manufacturing spool made of thermoplastic material for winding strand-shaped material according to one of the preceding claims **characterized in that**:
a. Providing two flange discs with an outer flange surface and an inner flange surface with a central through central bore that is surrounded by an annular recess in the inner flange surface, wherein an annular wall extends inside the annular recess forming at least one channel inside the annular recess next to an annular wall and a spool core with approximately the same diameter as the annular wall;
b. Pressing the spool core and annular wall in the annular recess of the inner flange surface on top of each other; and
c. Liquefying the material in the contact area between the spool core tube and the annular elevation with the flow of the liquefied material into the at least one channel and forming a materially bonded connection between the annular wall and the spool core, wherein the temporary liquefication of the material in the contact area is carried out by welding.

7. Method according to claim 6, **characterized in that** the spool is made of metal or plastic.

## Revendications

1. Bobine en matériau thermoplastique pour l'enroulement d'un produit en forme de cordon, avec des disques de flasque (22, 24) avec une surface extérieure de flasque et une surface intérieure de flasque (21, 23) avec chacune un trou central traversant (30) qui est entouré par un creux annulaire (25) avec une paroi annulaire (26) se trouvant à l'intérieur dans la surface intérieure de flasque, et
un noyau de bobine tubulaire (10),
le noyau de bobine (10) étant constitué d'un tube dont les surfaces frontales sont reliées par liaison de matière à une paroi annulaire (26) dans les creux annulaires (25) des disques de flasque (22, 24),
le noyau de bobine (10) ayant approximativement le même diamètre que la paroi annulaire (26) dans le creux annulaire (25),
et l'attache par liaison de matière du noyau de bobine (10) à la paroi annulaire (26) des surfaces intérieures de flasque (21, 23) étant effectuée par soudage, notamment par soudage à l'air chaud, soudage par contact, soudage par ultrasons, soudage par infrarouge, soudage par miroir tubulaire, soudage par élément chauffant, **caractérisée en ce qu'**à côté de la paroi annulaire (26), il est prévu au moins un canal dans le creux annulaire (25) pour recevoir le matériau de liaison liquéfié.

2. Bobine selon la revendication 1, **caractérisée en ce que** le noyau de bobine (10) est un tube en matière plastique extrudé.

3. Bobine selon l'une quelconque des revendications précédentes, **caractérisée en ce que** le noyau de bobine (10) a une longueur de 150 à 700 mm.

4. Bobine selon l'une quelconque des revendications précédentes, **caractérisée en ce que** le diamètre du noyau de bobine (10) est de 110 à 500 mm.

5. Bobine selon l'une quelconque des revendications précédentes, **caractérisée en ce que** l'ouverture centrale (30) des disques de flasque (22, 24) a un diamètre compris entre 55 et 130 mm.

6. Procédé de fabrication d'une bobine assemblée en matériau thermoplastique pour l'enroulement d'un produit en forme de cordon selon l'une quelconque des revendications précédentes, **caractérisé par** :
a. la fourniture de deux disques de flasque ayant une surface extérieure de flasque et une surface intérieure de flasque avec chacune un trou central traversant entouré par un creux annulaire dans la surface intérieure de flasque, une paroi annulaire s'étendant dans le creux annulaire en formant au moins un canal dans le creux annulaire à côté de la paroi annulaire, et
un noyau de bobine d'approximativement le même diamètre que la paroi annulaire ;
b. la pression du noyau de bobine sur la paroi annulaire dans le creux annulaire de la surface intérieure de flasque ; et
c. la liquéfaction du matériau dans la zone de contact entre le tube de noyau de bobine et la protubérance annulaire, en faisant s'écouler le matériau liquéfié dans l'au moins un canal et en formant une liaison de matière entre la paroi annulaire et le noyau de bobine, la liquéfaction temporaire du matériau dans la zone de contact étant réalisée par soudage.

7. Procédé selon la revendication 6, **caractérisé en ce que** la bobine est fabriquée en métal ou en matière plastique.
